# EUROPEAN PATENT APPLICATION

(11) **EP 2 037 361 A1**
(43) Date of publication of application: **18.03.2009**
(21) Application number: 08160700.4
(22) Date of filing: 18.07.2008
(51) Int. Cl.: G06F 9/445

(54) **Video apparatus, video system and method for upgrading software thereof**

(30) Priority: 10.09.2007 KR 20070091583
(71) Applicant: Samsung Electronics Co., Ltd., Suwon-si, Gyeonggi-Do (KR)
(72) Inventor: Choi, Jae-ho, Gangnam-gu, Seoul (KR); Lee, Jong-eun, Seoul (KR)
(74) Representative: Walaski, Jan Filip

(57) **Abstract**

A video apparatus, a video system, and a method for upgrading software thereof are provided. The video apparatus included in the video system is a set-top box and a display apparatus which receives a video signal from the set-top box. If a memory card storing upgrading software is mounted on the display apparatus, the display apparatus transmits the software to the set-top box in a wireless manner. After performing an upgrade, the set-top box and the display apparatus may perform a rollback to have the same version of software. Accordingly, the set-top box and the display apparatus perform a software upgrade at the same time and thus the same version of software is realized in the set-top box and display apparatus.

## Description

The present invention relates to a video apparatus, a video system including the video apparatus, and a method for upgrading software thereof, and more particularly, to a video apparatus such as a set-top box which receives a broadcast signal from a broadcasting station and signal-processes the broadcast signal and a display apparatus which receives a video signal and an audio signal from a set-top box and outputs the signals.

In general, a video apparatus such as a set-top box receives a broadcast signal transmitted from a broadcasting station, divides the broadcast signal into a video signal, an audio signal and an extra data signal, and transmits the signals to an external display apparatus. The set-top box is connected to an image storage device such as a DVD player, and receives a video signal and an audio signal from a DVD, signal-processes the signals and transmits the processed signals to the external display apparatus.

In recent years, the set-top box and the display apparatus are enabled to transmit and receive various signals to and from each other in a wireless manner so that there is no restriction on where they can be located. Also, the set-top box and the display apparatus are provided with compatible software so that the display apparatus can receive and process a video signal and an audio signal transmitted from the set-top box and the set-top box can receive and process a user command input through the display apparatus.

However, it is difficult for a user to directly upgrade software functions of the set-top box and the display apparatus. Therefore, the user has to request a service provider to upgrade the set-top box and the display apparatus respectively. Consequently, the user has to inform the service provider every time that the necessity occurs for upgrading the set-top box and the display apparatus, which causes an inconvenience to the user.

Also, if the user can directly upgrade the set-top box and the display apparatus, the user upgrades them separately. Consequently, software versions of the set-top box and the display apparatus may not coincide with each other, and thus a mutual communication between them becomes impossible. Therefore, the user has to check whether the software versions of the set-top box and the display apparatus coincide with each other every time that they are upgraded.

The present invention provides a video apparatus which includes a set-top box and a display apparatus which are operated as a set, and mounts a memory card storing software for the set-top box and software for the display apparatus on one of the set-top box and the display apparatus and transmits the software to the other apparatus in a wireless manner, thereby performing an upgrade, a video system including the video apparatus, and a method for upgrading software thereof.

The present invention also provides a video apparatus which includes a set-top box and a display apparatus, and, in order to make software versions of the set-top box and the display apparatus coincide with each other, rolls back to the software that was previously installed on the set-top box and the display apparatus according to a result of upgrading, a video system including the video apparatus, and a method for upgrading software thereof.

According to an aspect of the present invention, there is provided a video system including a first video apparatus which performs an upgrade according to a first software, and a second video apparatus which performs an upgrade according to a second software, wherein at least one of the first video apparatus and the second video apparatus performs a rollback to make versions of software of the first video apparatus and the second video apparatus coincide with each other.

Upon receiving the first software and the second software, the first video apparatus may transmit the second software to the second video apparatus.

If an error occurs during the process of either upgrading with the first software or rebooting to realize the first software, the first video apparatus may perform a rollback.

If an error occurs during the process of either upgrading with the second software or rebooting to realize the second software, the second video apparatus may perform a rollback.

The first software and the second software may be received at the first video apparatus from any one of a portable storage medium and an external communication network.

The first video apparatus may transmit the second software to the second video apparatus in a wireless manner.

The first video apparatus and the second video apparatus may constitute a single set.

One of the first video apparatus and the second video apparatus may be a broadcast receiving apparatus, and the other one may be a display apparatus which receives a video signal from the broadcast receiving apparatus.

According to another aspect of the present invention, there is provided a video apparatus including an interface which communicates with an external video apparatus which is operated as a set with the video apparatus, and a controller which performs an upgrade according to upgrading software, receives a result of upgrading of the external video apparatus through the interface, and determines whether to perform a rollback according to the result.

If an error occurs during the process of either upgrading with the upgrading software or rebooting to realize the upgrading software, the controller may perform a rollback.

The upgrading software may be received from any one of a portable storage medium and the interface.

The controller may control the interface to transmit software for upgrading the external video apparatus to the external video apparatus.

The video apparatus may further include a receiver which receives the upgrading software and software for upgrading the external video apparatus.

According to still another aspect of the present invention, there is provided a method for upgrading a video apparatus, the method including receiving by a first video apparatus a first software for upgrading the first video apparatus and a second software for upgrading a second video apparatus, transmitting the second software from the first video apparatus to the second video apparatus, and performing upgrades of the first video apparatus and the second video apparatus.

The method may further include performing a rollback to make versions of software after the upgrades of the first video apparatus and the second video apparatus coincide with each other.

The method may further include, if an error occurs during the process of either upgrading with the first software or rebooting to realize the first software, performing a rollback.

The method may further include, if an error occurs during the process of either upgrading with the second software or rebooting to realize the second software, performing a rollback.

In the receiving operation, the first software and the second software may be received at the first video apparatus from any one of a portable storage medium and an external communication network.

The transmitting operation may transmit the second software to the second video apparatus in a wireless manner.

The first video apparatus and the second video apparatus may constitute a single set.

One of the first video apparatus and the second video apparatus may be a broadcast receiving apparatus, and the other one may be a display apparatus which receives a video signal from the broadcast receiving apparatus.

According to still another aspect of the present invention, a method for upgrading a video apparatus, the method including performing an upgrade according to upgrading software, receiving a result of upgrading an external video apparatus, and determining whether to perform a rollback according to the result.

The method may further include, if an error occurs during the process of either upgrading with the upgrading software or rebooting to realize the upgrading software, performing a rollback.

The method may further include receiving the upgrading software from any one of a portable storage medium and the external video apparatus.

The method may further include transmitting software for upgrading the external video apparatus to the external video apparatus.

The method may further include receiving the upgrading software and software for upgrading the external video apparatus.

Above and other aspects of the present invention will become apparent and more readily appreciated from the following description of the exemplary embodiments, taken in conjunction with the accompany drawings in which:
FIG. 1 is a view illustrating a video system according to an exemplary embodiment of the present invention;
FIG. 2 is a block diagram schematically illustrating video apparatuses included in the video system according to the exemplary embodiment of the present invention;
FIG. 3 is a flowchart illustrating a method for upgrading software of a set-top box of the video apparatuses included in the video system according to an exemplary embodiment of the present invention;
FIG. 4 is a flowchart illustrating a method for upgrading software of a display apparatus of the video apparatuses included in the video system according to the exemplary embodiment of the present invention;
FIG. 5 is a flowchart illustrating a method for making software version information of the set-top box coincide with that of the display apparatus according to an exemplary embodiment of the present invention;
FIG. 6 is a flowchart illustrating a method for making software version information of the display apparatus coincide with that of the set-top box according to an exemplary embodiment of the present invention; and
FIG. 7 is a flowchart illustrating a process of performing a rollback of the set-top box if the display apparatus fails to reboot according to an exemplary embodiment of the present invention.

Certain exemplary embodiments of the present invention will be described in greater detail with reference to the accompanying drawings.

In the following description, the same drawing reference numerals are used for the same elements even in different drawings. The matter defined in the description, such as detailed construction and elements, are provided to assist in a comprehensive understanding of the invention. Thus, it is apparent that exemplary embodiments of the present invention can be carried out without this specifically defined matter. Also, well-known functions or constructions are not described in excessive detail since they would obscure the invention unnecessarily.

A first video apparatus included in a video system according to an exemplary embodiment of the present invention may be a display apparatus, a mobile phone, or a personal digital assistant (PDA) which is capable of displaying an image, and a second video apparatus may be a set-top box, a DVD player, or a computer which can communicate with the first video apparatus. The first and the second video apparatuses are operated as a single set. Hereinafter, by way of an example, the first video apparatus is a display apparatus such as a monitor or a television and the second video apparatus is a set-top box which transmits a video signal to the first video apparatus.

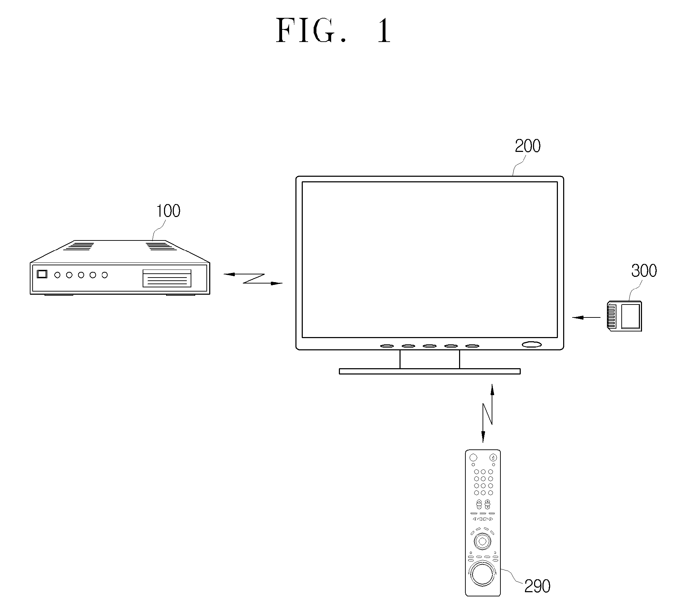

FIG. 1 is a view illustrating a video system according to an exemplary embodiment of the present invention.

Referring to FIG. 1, a video system according to an exemplary embodiment of the present invention comprises a set-top box 100 and a display apparatus 200.

The set-top box 100 receives a broadcast signal transmitted from a broadcasting station (not shown) or receives a video signal and an audio signal from an image reproducing apparatus such as a DVD player. The set-top box 100 signal-processes the received signal, and then generates a packet signal suitable for wireless transmission and transmits the packet signal to the display apparatus 200. The set-top box 100 and the display apparatus 200 adopt a wireless transmission scheme such as a wireless LAN or Bluetooth to transmit signals to each other.

The display apparatus 200 receives the packet signal transmitted from the set-top box 100 in a wireless manner, and then signal-processes a video signal according to a displaying method, and displays the video signal on a display and outputs an audio signal through a speaker. The display apparatus 200 is operated as a set with the set-top box 100, and a user can control the set-top box 100 through the display apparatus 200 and also can control the display apparatus 200 through the set-top box 100. That is, a user command input through a remote controller 290 is transmitted from the display apparatus 200 to the set-top box 100 so that the user can control operation of the set-top box 100.

A memory card 300 storing software for upgrading the set-top box 100 and software for upgrading the display apparatus 200 is mounted on the display apparatus 200. If the memory card 300 is mounted on the display apparatus 200, the software for upgrading the set-top box 100 is transmitted and stored to the set-top box 100.

The set-top box 100 performs an upgrade by setting up the stored software and performs a rollback according to a result of the upgrade. That is, if an error occurs during the process of upgrading, the set-top box 100 transmits error information to the display apparatus 200 and rolls back to the software that was previously installed on the set-top box 100. Also, the set-top box 100 transmits version information of the software currently installed on the set-top box 100 to the display apparatus 200.

On the other hand, if the set-top box 100 normally performs a software upgrade, the set-top box 100 transmits information indicating that the upgrade has been completed to the display apparatus 200 and performs a reboot. If the reboot is normally completed, the set-top box 100 transmits version information of the current software to the display apparatus 200. If the reboot is not normally completed, the set-top box 100 determines that an error exists in the software itself and thus rolls back to the previous software.

If the display apparatus 200 receives the information indicating that the upgrade has been completed from the set-top box 100, the display apparatus 200 receives from the memory card 300 the software for upgrading the display apparatus 200 and stores the software thereto. Then, the display apparatus 200 performs an upgrade by setting up the stored software, and if the upgrade is normally completed, performs a reboot. If neither an upgrade nor a reboot is normally performed, the display apparatus 200 rolls back to the software that was previously installed on the display apparatus 200.

The set-top box 100 transmits version information of finally installed software to the display apparatus 200, and the display apparatus 200 compares the version information transmitted from the set-top box 100 with version information of current software. If a version of the software installed on the set-top box 100 does not coincide with a version of the software installed on the display apparatus 200, the set-top box 100 and the display apparatus 200 roll back to the software that was previously installed thereon. At this time, any video apparatus 100 or 200 that has performed a rollback once during the process of upgrading does not perform a rollback. This is because the video apparatus that has already performed a rollback is operated with the previous software.

In FIG. 1, by way of an example after the display apparatus 200 completes the software upgrade, the set-top box 100 performs the software upgrade. However, the upgrading order can be changed. That is, after the set-top box 100 completes a software upgrade, the set-top box 100 may transmit software to the display apparatus 200 and then the display apparatus 200 performs a software upgrade.

Also, the memory card 300 storing software for upgrading the set-top box 100 and software for upgrading the display apparatus 200 may be mounted on the set-top box 100 and thus the software may be transmitted to the display apparatus 200.

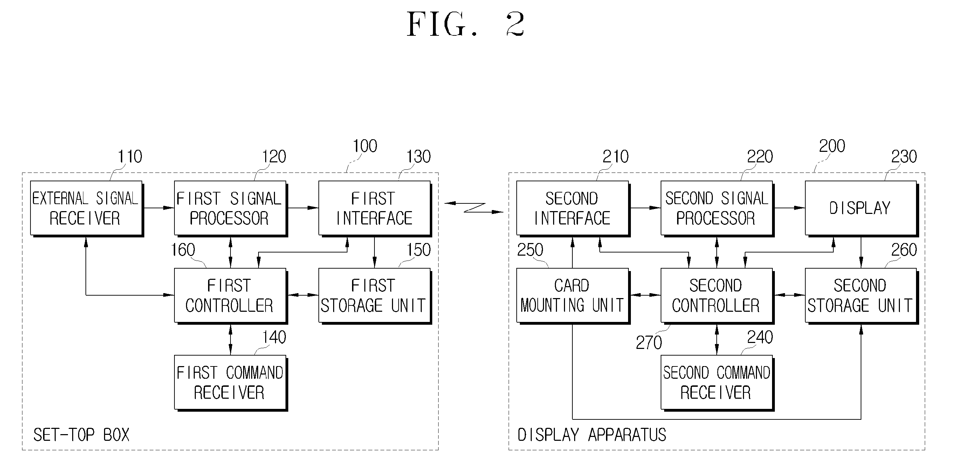

FIG. 2 is a block diagram schematically illustrating video apparatuses included in the video system according to the exemplary embodiment of the present invention.

Referring to FIG. 2, the set-top box 100 according to an exemplary embodiment of the present invention comprises an external signal receiver 110, a first signal processor 120, a first interface 130, a first command receiver 140, a first storage unit 150, and a first controller 160.

The external signal receiver 110 receives a broadcast signal transmitted from a broadcasting station, demodulates and error-corrects the broadcast signal, divides the signal into a video signal, an audio signal, and an extra data signal, and outputs the signals. The external signal receiver 110 also receives a video signal and an audio signal transmitted from an image reproducing device such as a DVD player.

The first signal processor 120 encodes the video signal, the audio signal, and the extra data signal output from the external signal receiver 110 in an MPEG2 or a MP3 format, and then generates a packet signal suitable for wireless transmission. If the set-top box 100 is further provided with a displaying function, the first signal processor 120 may further perform a signal-processing to output the signals as an image and a sound.

The first interface 130 transmits the packet signal generated by the first signal processor 120 to the display apparatus 200. The first interface 130 receives various control signals transmitted from the display apparatus 200 and transmits the control signals to the first controller 160. Also, if a new version of software for upgrading the set-top box 100 is transmitted from the display apparatus 200, the first interface 130 receives the new version of software.

The first command receiver 140 receives a user command to control operation of the set-top box 100, and the operation of the set-top box 100 is controlled according to the user command received through the first command receiver 140.

The first storage unit 150 stores software and data which are required to operate the set-top box 100. Also, the first storage unit 150 stores a new version of software transmitted from the display apparatus 200 through the first interface 130.

The first controller 160 controls operation of the set-top box 100 according to a user command input through the first command receiver 140 or a user command transmitted from the display apparatus 200 through the first interface 130. If a new version of software is transmitted from the first interface 130, the first controller 160 stores the new version of software to the first storage unit 150 and then performs an upgrade by setting up the software. If an error occurs during the process of receiving the software or upgrading with the software, the first controller 160 generates error information and transits the error information to the display apparatus 200 through the first interface 130. Also, if the upgrade is completed, the first controller 160 performs a reboot, and if an error occurs during the process of upgrading or rebooting, the first controller 160 rolls back to the software that was previously installed on the set-top box 100.

The first controller 160 controls the first interface 130 to transmit version information of current software which is finally installed on the set-top box 100 to the display apparatus 200 regardless of whether an error occurs during the process of receiving the software, upgrading, and rebooting. The first controller 160 rolls back to the previous software if the set-top box 100 does not receive information indicating that versions coincide with each other from the display apparatus 200 and if the set-top box 100 has never performed a rollback.

Referring to FIG. 2, the display apparatus 200 according to an exemplary embodiment of the present invention comprises a second interface 210, a second signal processor 220, a display 230, a second command receiver 240, a card mounting unit 250, a second storage unit 260, and a second controller 270.

The second interface 210 receives a packet signal transmitted from the set-top box 100 and transmits the received packet signal to the second signal processor 220. Also, the second interface 210 transmits a user command received through the second command receiver 240 to the set-top box 100, and transmits software stored in the memory card 300 mounted on the card mounting unit 250 for upgrading the set-top box 100 to the set-up box 100 under the control of the second controller 270.

The second signal processor 220 decodes a video signal and an audio signal included in the packet signal received through the second interface 210 and converts them into a video signal suitable for display and an audio signal suitable for output. The display 230 displays the video signal signal-processed by the second signal processor 220 as an image corresponding to a resolution. The audio signal is output as a sound through a speaker (not shown).

The second command receiver 240 receives a user command transmitted from various manipulation keys (not shown) or a remote controller 290 and transmits the user command to the second controller 270. The user command input through the second command receiver 240 is transmitted to the set-top box 100 through the second interface 210 under the control of the second controller 270.

The card mounting unit 250 mounts thereon the memory card 300 storing software for upgrading the set-top box 100 and software for upgrading the display apparatus 200. The software for upgrading the set-top box 100 is transmitted to the set-top box 100 through the second interface 210 under the control of the second controller 270. The software for upgrading the display apparatus 200 is transmitted to the second storage unit 260 under the control of the second controller 270.

The second storage unit 260 stores software and data which are required to operate the display apparatus 200. Also, the second storage unit 260 stores new software of the memory card 300 mounted on the card mounting unit 250.

In this exemplary embodiment, the software for upgrading the set-top box 100 and the software for upgrading the display apparatus 200 are stored in the memory card 300 by way of an example. However, the software may be received from a communication network. That is, it is possible for the set-top box 100 to receive software for upgrading the set-top box 100 and software for upgrading the display apparatus 200 through the external signal receiver 110. In this case, the set-top box 100 receives software form a broadcast network or a communication network communicating with the outside such as Internet, and transmits the software for upgrading the display apparatus 200 to the display apparatus 200.

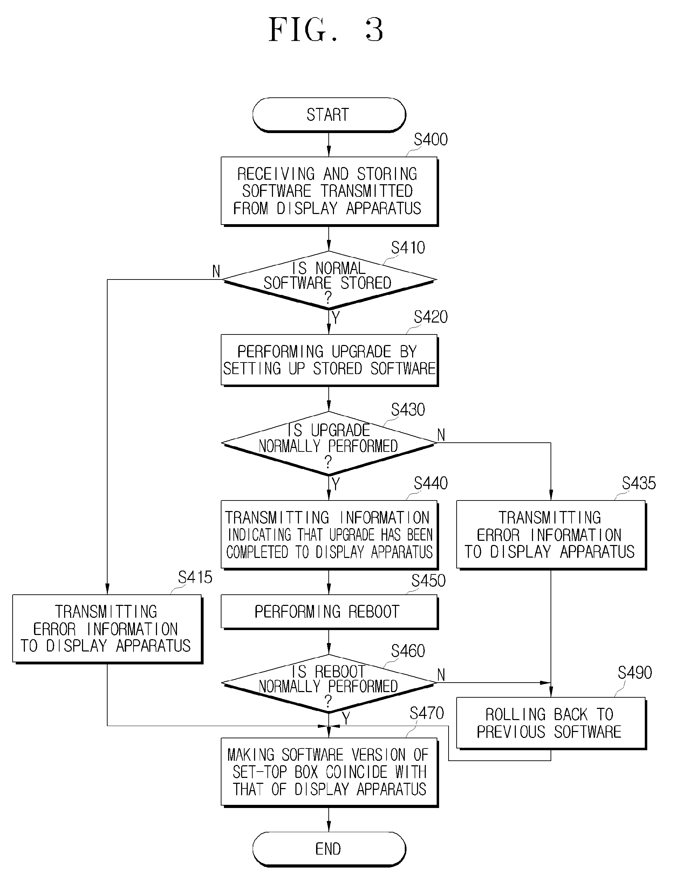

FIG. 3 is a flowchart illustrating a method for upgrading software of the set-top box of the video apparatuses included in the video system according to an exemplary embodiment of the present invention.

Referring to FIG. 3, the first controller 160 receives software transmitted from the display apparatus 200 and stores the software to the first storage unit 150 (S400). If normal software is stored to the first storage unit 150 (S410-Y), the first controller 160 performs an upgrade by setting up the stored software (S420).

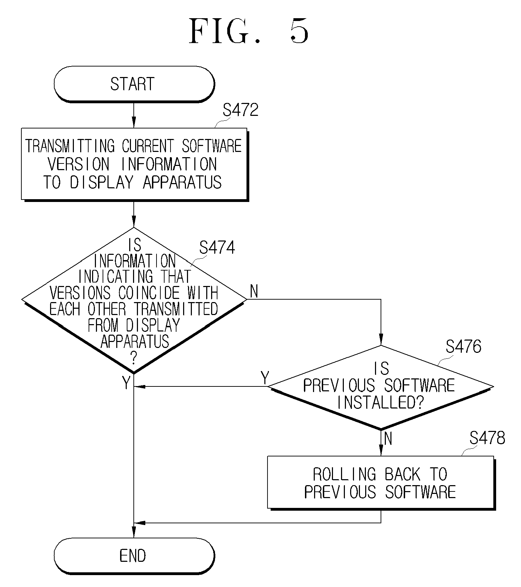

If the upgrade is normally performed (S430-Y), the first controller 160 controls the first interface 130 to transmit information indicating that the upgrade has been completed to the display apparatus 200 (S440). Next, the first controller 160 performs a reboot to realize the upgraded software (S450), and if the reboot is normally performed (S460-Y), the first controller 160 performs a process of making a software version of the set-top box 100 coincide with that of the display apparatus 200 (S470). This process of making software versions of the set-top box 100 and the display apparatus 200 coincide with each other will be described below with reference to FIG. 5.

If normal software is not stored to the first storage unit 150 due to a problem in the transmission of software or an inherent problem of software in operation S410 (S410-N), the first controller 160 controls the first interface 130 to transmit error information to the display apparatus 200 (S415). Then, the first controller performs the process of making the software version of the set-top box 100 coincide with that of the display apparatus 200 (S470).

If the upgrade of software is not normally performed in operation S430 (S430-N), the first controller 160 controls the first interface 130 to transmit error information to the display apparatus 200 (S435). Then, the first controller 160 rolls back to the software that was previously installed on the set-top box 100 (S490), and performs the process of making the software version of the set-top box 100 coincide with that of the display apparatus 200 (S470).

If the reboot is not normally performed in operation S460 (S460-N), the first controller 160 rolls back to the software that was previously installed on the set-top box 100 (S490), and performs the process of making the software version of the set-top box 100 coincide with that of the display apparatus 200 (S470).

According to the process described above, the set-top box 100 connected to the display apparatus 200 in a wireless manner can upgrade the software. Also, if the upgrading operation S420 or the rebooting operation S450 fails, the first controller 160 controls such that these operations are repeated a predetermined number of times and a rollback is performed.

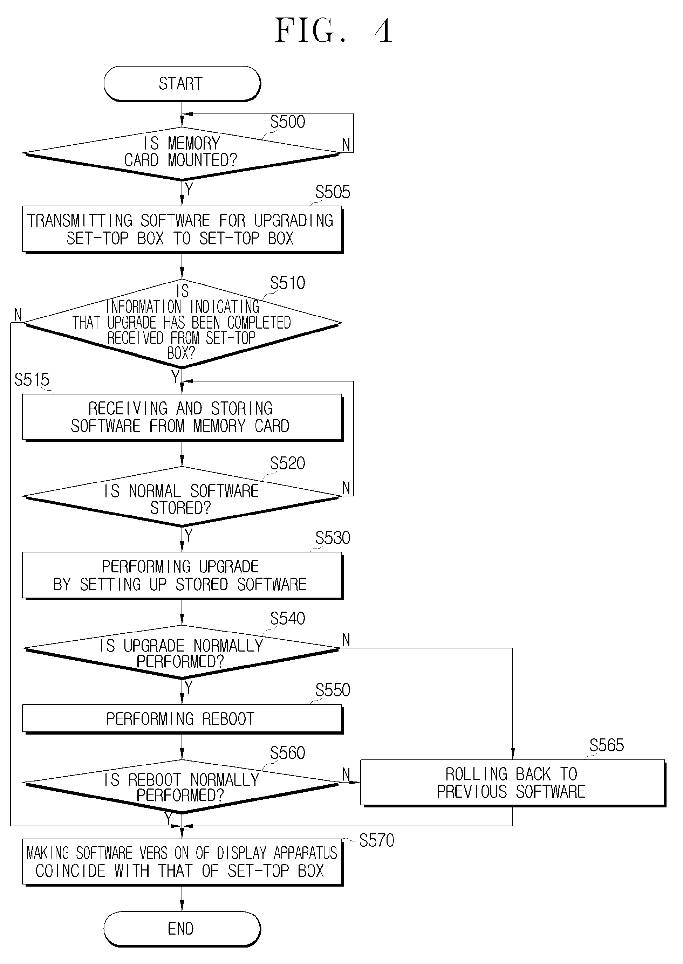

FIG. 4 is a flowchart illustrating a method for upgrading software of the display apparatus of the video apparatuses included in the video system according to an exemplary embodiment of the present invention.

Referring to FIG. 4, if the memory card 300 is mounted on the card mounting unit 250 (S500), the second controller 270 controls the second interface 210 to transmit software for upgrading the set-top box 100 to the set-top box 100 (S505).

If information indicating that the upgrade has been completed is received from the set-top box 100 (S510-Y), the second controller 270 receives software for upgrading the display apparatus 200 from the memory card 300 and stores the software to the second storage unit 260 (S515). If normal software is stored to the second storage unit 260 (S520), the second controller 270 performs an upgrade by setting up or installing the stored software (S530).

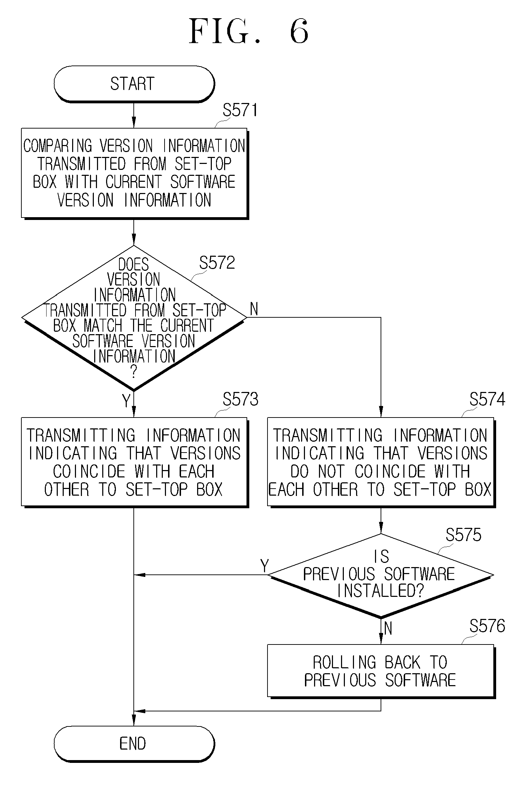

If the upgrade is normally performed (S540-Y), the second controller 270 performs a reboot to realize the software (S550), and if the reboot is normally performed (S560-Y), the second controller 270 performs a process of making a software version of the video apparatus 200 coincide with that of the set-top box 100 (S570). This process will be described in detail below with reference to FIG. 6.

If the information indicating that the upgrade has been completed is not received from the set-top box 100 and error information is received in operation S510 (S510-N), the second controller 270 performs the process of making the software version of the video apparatus 200 coincide with that of the set-top box 100 (S570).

If the upgrade is not normally performed in operation S540 (S540-N), the second controller 270 rolls back to the software that was previously installed on the video apparatus 200 (S565), and then performs the process of making the software version of the video apparatus 200 coincide with that of the set-top box 100 (S570).

According to the process described above, the display apparatus 200 connected to the set-top box 100 in a wireless manner can upgrade the software. Also, if the upgrading operation S530 or the rebooting operation S550 fails, the second controller 270 controls such that these operations are repeated a predetermined number of times and a rollback is performed.

In this exemplary embodiment, the memory card 300 is mounted on the display apparatus 200 by way of an example. However, the memory card 300 may be mounted on the set-top box 100. Also, the method for upgrading software according to exemplary embodiments of the present invention is applicable to any video apparatuses which are operated as a set besides the set-top box 100 and the display apparatus 200 as previously described in exemplary embodiments of the present invention.

FIG. 5 is a flowchart illustrating a method for making software version information of the set-top box coincide with that of the display apparatus according to the exemplary embodiment of the present invention.

Referring to FIG. 5, the first controller 160 controls the first interface 130 to transmit version information of current software to the display apparatus 200 (S472). If the first controller 160 receives information indicating that the version coincides with that of the display apparatus 200 from the display apparatus 200 through the first interface 130 (S474-Y), the first controller 160 terminates the upgrading of software of the set-top box 100. If the first controller 160 receives information indicating that the version does not coincide with that of the display apparatus 200 from the display apparatus 200 (S474-N), the first controller 160 determines whether previous software is installed on the set-top box 100 or not (S476).

If it is determined that the previous software is installed on the set-top box 100 in operation S476 (S476-Y), the first controller 160 terminates the upgrading of software. On the other hand, if it is determined that the previous software is not installed on the set-top box 100 (S476-N), the first controller 160 rolls back to the software that was previously installed on the set-top box 100 (S478), and terminates the upgrading of software of the set-top box 100.

FIG. 6 is a flowchart illustrating a method for making a software version of the display apparatus coincide with that of the set-top box according to an exemplary embodiment of the present invention.

Referring to FIG. 6, the second controller 270 compares version information transmitted from the set-top box 100 with version information of its current software (S571), and if it is determined that the version information transmitted from the set-top box 100 coincides with the version information of current software (S572-Y), the second controller transmits information indicating that the versions coincide with each other to the set-top box 100 (S573), and terminates the upgrading of software.

If it is determined that the version information transmitted from the set-top box 100 does not coincide with the version information of current software in operation S572 (S572-N), the second controller 270 transmits information indicating that the versions do not coincide with each other to the set-top box 100 (S574). The second controller 270 determines whether previous software is installed in the display apparatus 200 (S575), and if it is determined that the previous software is installed (S575-Y), the second controller 270 terminates the upgrading of software.

If it is determined that the previous software is not installed on the display apparatus 200 in operation S575 (S575-N), i.e., if the display apparatus 200 completes the upgrading operation, the second controller 270 rolls back to the software that was previously installed on the display apparatus 200 (S576), and terminates the upgrading of software.

According to the method described above with reference to FIGS. 5 and 6, software versions of the set-top box 100 and the display apparatus 200 can coincide with each other.

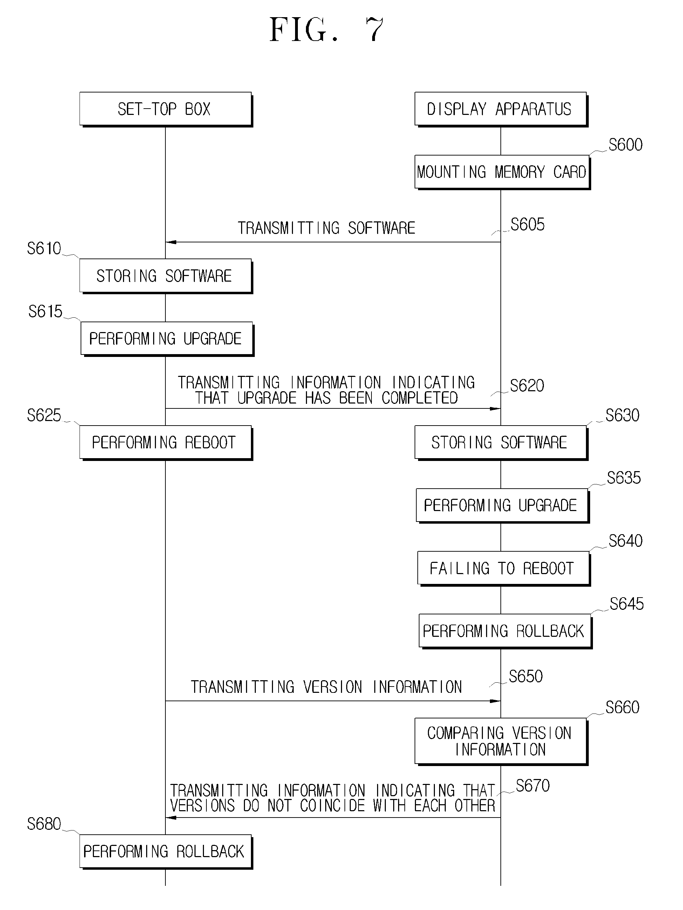

FIG. 7 is a flowchart illustrating a process of performing a rollback of the set-top box if the display apparatus fails to reboot, according to an exemplary embodiment of the present invention.

Referring to FIG. 7, if the memory card 300 is mounted on the display apparatus 200 (S600), the display apparatus 200 transmits software for upgrading the set-top box 100 to the set-top box 100 (S605). Then, the set-top box 100 stores the transmitted software (S610), and performs an upgrade (S615). If the upgrade is completed at the set-top box 100, the set-top box 100 transmits information indicating that the upgrade has been completed to the display apparatus 200 (S620).

The display apparatus 200, which received the information indicating that the upgrade has been completed from the set-top box 100, stores software for upgrading the display apparatus 200 (S630). After the display apparatus performs an upgrade with the stored software (S635), it performs a reboot. If the display apparatus fails to reboot (S640), the display apparatus 200 performs a rollback (S645).

If version information of software of the set-top box 100 is transmitted from the set-top box 100 to the display apparatus 200 (S650), the display apparatus 200 compares the version information of software of the set-top box 100 with version information of software of the display apparatus 200 (S660).

Since a new version of software is realized in the set-top box 100 and a previous version of software is realized in the display apparatus 200 because the display apparatus 200 fails to reboot, it is determined that software versions of the two apparatuses 100 and 200 do not coincide with each other. Accordingly, the display apparatus 200 transmits information indicating that versions do not coincide with each other to the set-top box 100 (S670), and the set-top box 100 rolls back to the previous version of software (S680).

According to the process described above, it is possible to make the software versions of the set-top box 100 and the display apparatus 200 coincide with each other.

According to exemplary embodiments of the present invention, the user can upgrade the video apparatuses which are operated as a set, such as the set-top box 100 and the display apparatus 200, since software stored in the memory card 300 can be transceived in a wireless manner. Also, if an error occurs in the process of upgrading software or rebooting, or if software versions of the set-top box 100 and the display apparatus 200 do not coincide with each other, it is possible to roll back to the previous version of software and thus to make the software versions of the set-top box 100 and display apparatus 200 coincide with each other.

The foregoing exemplary embodiments and advantages are merely exemplary and are not to be construed as limiting the present invention. The present teaching can be readily applied to other types of apparatuses. Also, the description of exemplary embodiments of the present invention is intended to be illustrative, and not to limit the scope of the claims, and many alternatives, modifications, and variations will be apparent to those skilled in the art.

## Claims

1. A video apparatus comprising:
an interface for communicating with an external apparatus which is operable as a set with the video apparatus; and
a controller for performing an upgrade according to upgrading software, for receiving a result of an upgrade of the external apparatus through the interface, and for determining whether to perform a rollback according to the result,
wherein the rollback is arranged to re-establish software which is a previous version of the upgrading software.

2. The video apparatus as claimed in claim 1, wherein if an error occurs during either the upgrade according to the upgrading software or a reboot to implement the upgrading software, the controller is arranged to performs the rollback.

3. The video apparatus as claimed in claim 1 or 2, wherein the upgrade software is arranged to be received from one of a portable storage medium and the interface.

4. The video apparatus as claimed in any one of the preceding claims, wherein the controller is arranged to control the interface to transmit software for upgrading the external video apparatus to the external video apparatus.

5. The video apparatus as claimed in claim 4, wherein the controller is arranged to control the interface to transmit software for upgrading the external video apparatus to the external video apparatus in a wireless manner.

6. The video apparatus as claimed in any one of the preceding claims, further comprising a receiver for receiving the upgrading software and software for upgrading the external video apparatus.

7. A system comprising the video apparatus as claimed in any one of the preceding claims and an external apparatus, wherein the video apparatus and the external apparatus constitute a single set of corresponding apparatuses.

8. The system as claimed in claim 7, wherein one of the video apparatus and the external apparatus is a broadcast receiving apparatus, and the other one of the video apparatus and the external apparatus is a display apparatus which is arranged to receive a video signal from the broadcast receiving apparatus.

9. A method of upgrading a video apparatus, the method comprising:
performing an upgrade according to upgrading software;
receiving a result of an upgrade of an external apparatus; and
determining whether to perform a rollback according to the result,
wherein the rollback re-establishes software which is a previous version of the upgrading software.

10. The method as claimed in claim 9, further comprising performing a rollback if an error occurs during either the upgrade according to the upgrading software or a reboot to implement the upgrading software.

11. The method as claimed in claim 9 or 10, further comprising receiving the upgrading software from one of a portable storage medium and the external video apparatus.

12. The method as claimed in claim 9, 10 or 11, further comprising transmitting software for upgrading the external apparatus to the external apparatus.

13. The method as claimed in claim 12, comprising transmitting the software for upgrading the external apparatus to the external apparatus in a wireless manner.

14. The method as claimed in any one of claims 9 to 13, further comprising receiving the upgrading software and software for upgrading the external apparatus.

15. The method as claimed in any one of claims 9 to 14, wherein the video apparatus and the external apparatus constitute a single set of corresponding apparatuses.
